# EUROPEAN PATENT APPLICATION

(11) **EP 3 828 960 A1**
(43) Date of publication of application: **02.06.2021**
(21) Application number: 20167003.1
(22) Date of filing: 31.03.2020
(51) Int. Cl.: H01M 2/36, G01M 3/32, H01M 10/42

(54) **BATTERY MANUFACTURING METHOD AND SYSTEM BASED ON VACUUM PROCESS ASSEMBLY**

(30) Priority: 29.11.2019 CN 201911203069
(71) Applicant: Guangdong HYNN Technologies Co., Ltd., Dongguan, Guangdong (CN)
(72) Inventor: HUANG, Guowei, Dongguan, Guangdong (CN); WANG, Shoumo, Dongguan, Guangdong (CN); ZHAO, Shaohua, Dongguan, Guangdong (CN); ZHOU, Junhui, Dongguan, Guangdong (CN)
(74) Representative: Zaboliene, Reda

(57) **Abstract**

Embodiments of the present application disclose a battery manufacturing method and system based on a vacuum process assembly. The vacuum process assembly includes a vacuum cup, a vacuum suction nozzle and a normally-closed automatic control valve; the automatic control valve includes a vacuum connector and a control portion; and the method includes the following steps of: pressing the vacuum suction nozzle of the vacuum process assembly onto an electrolyte filling hole of a battery in a tray to provide communication between an inner space of the battery and an inner space of the vacuum process assembly, forming an airtight space; locking the vacuum process assembly with the tray, forming a vacuum process enclosed tray integrated unit; applying, by an air tightness detection device, a negative pressure to the airtight space through the vacuum connector of the vacuum process assembly to detect air tightness of the airtight space; and operating the control portion to provide communication between the vacuum connector and the inner space of the battery. According to the embodiments of the present application, during manufacturing of a battery, an airtight environment is formed for the battery which is opened without secondary sealing of the electrolyte filling hole, so that the requirement on indoor air for battery manufacturing is reduced.

## Description

### BACKGROUND

### TECHNICAL FIELD

The present application relates to the technical field of batteries, in particular to a battery manufacturing method and system based on a vacuum process assembly.

### RELATED ART

With the advent of electronic devices, the application of aluminum-can prismatic lithium-ion batteries in various fields is more and more popular. During electrolyte filling and seal rivet welding of a lithium-ion battery, a conventional lithium-ion battery process includes the following procedures of: electrolyte filling - plug inserting - standing and circulation - plug removing- vacuum formation - secondary electrolyte supplementation - seal rivet welding. After filled with electrolyte, the battery is transferred to the procedure of standing, and even though an electrolyte filling hole is blocked by a plug, it is still required to keep indoor air dry and pure in order to prevent the electrolyte in the battery from being influenced by air; after standing is completed, it is also required to keep indoor air dry and pure during circulation of the battery; and on the way to vacuum formation after the plug is removed, it is still required to keep indoor air dry and pure. Processes such as maintaining indoor air dry and pure cost a lot.

The above-mentioned disclosure of the background art is only used for assisting in understanding the inventive concept and technical solution of the present application, and does not necessarily belong to the prior art of the present application. Insofar as no explicit evidence indicates that the above-mentioned contents have been disclosed on the filing date of the present application, the above-mentioned background art should not be used for evaluating the novelty and inventive step of the present application.

### SUMMARY

The present application provides a battery manufacturing method and system based on a vacuum process assembly, in which during manufacturing of a battery, an airtight environment is formed for the battery which is opened without secondary sealing of the electrolyte filling hole, so that the requirement on indoor air for battery manufacturing can be reduced, and thus the cost of battery manufacturing can be greatly reduced.

In a first aspect, the present application provides a battery manufacturing method based on a vacuum process assembly: the vacuum process assembly includes a vacuum cup, a vacuum suction nozzle and a normally-closed automatic control valve; the automatic control valve includes a vacuum connector and a control portion;
A1. pressing the vacuum suction nozzle of the vacuum process assembly onto an electrolyte filling hole of a battery in a tray to provide communication between an inner space of the battery and an inner space of the vacuum process assembly, forming an airtight space;
A2. locking the vacuum process assembly with the tray, forming a vacuum process enclosed tray integrated unit;
A3. applying, by an air tightness detection device, a negative pressure to the enclosed space through the vacuum connector of the vacuum process assembly to detect air tightness of the airtight space; and if the air tightness meets a preset requirement, sending the vacuum process enclosed tray integrated unit to a next procedure; and
A4. operating the control portion to provide communication between the vacuum connector and the inner space of the battery to separate the vacuum process assembly from the tray.

In some preferred embodiments, further includes: filling, by an electrolyte filling device, the battery with electrolyte through the electrolyte filling hole.

In some preferred embodiments, the automatic control valve is implemented in a form of a pneumatic control valve or a solenoid valve;
the control portion of the pneumatic control valve is a positive pressure connector; and
the step A4 specifically includes: applying, by a positive pressure source, a positive pressure to the positive pressure connector to provide communication between the vacuum connector and the inner space of the battery; and introducing a gas into the vacuum connector to break the negative pressure in the vacuum process assembly so as to separate the vacuum process assembly from the tray.

In some preferred embodiments, the tray is provided with a positioning pin and an automatic locking mechanism, and the vacuum process assembly is provided with a positioning pin bushing and a locking portion; or, the tray is provided with a positioning pin bushing and a locking portion, and the vacuum process assembly is provided with a positioning pin and an automatic locking mechanism; or, the tray is provided with a positioning pin bushing and an automatic locking mechanism, and the vacuum process assembly is provided with a positioning pin and a locking portion; or, the tray is provided with a positioning pin and a locking portion, and the vacuum process assembly is provided with a positioning pin bushing and an automatic locking mechanism; and
the step A2 specifically comprises: aligning the positioning pin bushing with the positioning pin to allow the automatic locking mechanism to lock the locking portion, thereby forming the vacuum process enclosed tray integrated unit.

In some preferred embodiments, the automatic locking mechanism locks the locking portion by rotational yielding and restoration.

In some preferred embodiments, the positioning pin includes a guide portion and a fixing portion, the automatic locking mechanism includes a hook, a rotating shaft, a support and a rotational restoration component, the hook is provided with a first guide surface, and the locking portion is provided with a second guide surface; and
the step A2 specifically comprises: aligning the positioning pin bushing with the guide portion of the positioning pin to allow the second guide surface of the locking portion to contact with the first guide surface of the hook such that the hook presses the locking portion by rotational yielding and restoration.

In some preferred embodiments, the rotating restoration component is a torsion spring; and a position of the positioning pin is variable.

In some preferred embodiments, the vacuum cup includes a plurality of independent spaces, and each independent space is in communication with one vacuum suction nozzle.

In some preferred embodiments, the vacuum process assembly further includes a collecting connector; the vacuum cup is provided with a top plate and a partition plate; the independent spaces are separated by a plurality of the partition plate; a gap exists between the partition plates and the top plate to form a common space; and the common space is in communication with the vacuum connector via the collecting connector.

In some preferred embodiments, each independent space is a conical space tapering from top to bottom; and the tray is a restraining tray.

In some preferred embodiments, the next procedure is high-temperature standing.

In some preferred embodiments, the method further includes: putting a battery that has been filled with electrolyte into the tray.

In a second aspect, the present application provides a battery manufacturing system for implementing the method described above.

Compared with the prior art, the embodiments of the present application have the beneficial effects that:
the vacuum suction nozzle of the vacuum process assembly is pressed onto the electrolyte filling hole of the battery in the tray to provide communication between the inner space of the battery and the inner space of the vacuum process assembly, forming the airtight space; the vacuum process assembly is locked with the tray, forming the vacuum process enclosed tray integrated unit; a negative pressure is applied to detect air tightness of the enclosed space in the vacuum process enclosed tray integrated unit; and if the air tightness meets the preset requirement, the vacuum process enclosed tray integrated unit is sent to the next procedure; and in the next procedure and even subsequent procedures, the air tightness of the vacuum process enclosed tray integrated unit can be maintained under the action of the vacuum cup and the normally-closed automatic control valve of the vacuum process assembly; the inner space of the battery is isolated from air in the external environment, so that a vacuum space or a relative vacuum space is formed inside the battery; and the internal vacuum space of the battery can meet a series of environment requirements of the subsequent procedures, so that the requirements of subsequent procedures on indoor air can be reduced, for example, the environment requirements of standing or circulation can be reduced, thereby significantly reducing the cost of battery manufacturing.

### BRIEF DESCRIPTION OF THE DRAWINGS

FIG. 1 is a schematic flowchart of a battery manufacturing method based on a vacuum process assembly according to an embodiment of the present application;
FIG. 2 is a schematic flowchart of a variation of the battery manufacturing method based on the vacuum process assembly according to an embodiment of the present application;
FIG. 3 is a structural schematic diagram of a vacuum process enclosed tray integrated unit according to an embodiment of the present application;
FIG. 4 illustrates the structure of a tray according to an embodiment of the present application;
FIG. 5 illustrates the structure of a vacuum process assembly according to an embodiment of the present application;
FIG. 6 illustrates the structure of a vacuum cup according to an embodiment of the present application;
FIG. 7 is a cross-sectional view of the vacuum cup according to an embodiment of the present application;
FIG. 8 is a structural schematic view of a positioning pin according to an embodiment of the present application;
FIG. 9 is a perspective view of a locking mechanism according to an embodiment of the present application; and
FIG. 10 is a front view of the locking mechanism according to an embodiment of the present application.

### DETAILED DESCRIPTION

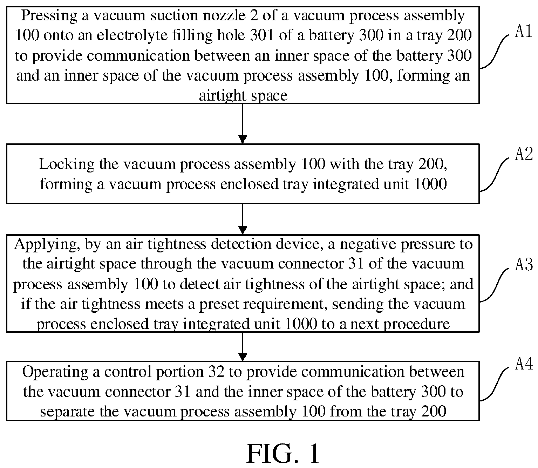

In order to more clearly understand the technical problems to be solved, technical solutions and beneficial effects of the embodiments of the present application, the present application is described in further detail below in conjunction with FIGs. 1 to 10 and the embodiments. It should be understood that the specific embodiments described herein are merely illustrative of the present application and are not intended to be limiting thereof.

It is to be understood that the terms "length, width, upper, lower, front, rear, left, right, vertical, horizontal, top, bottom, inner, outer", and the like, refer to orientations or positional relationships based on the orientations or positional relationships shown in the figures. It is merely for the purpose of describing the embodiments of the present application and of simplifying the description, and is not intended to indicate or imply that a particular orientation, configuration and operation of the referenced device or element is necessary, and thus should not be construed as limiting the present application.

Furthermore, the terms "first" and "second" are used for descriptive purposes only and are not to be construed as indicating or implying relative importance or implicitly indicating the number of technical features indicated. Thus, features defined by "first" and "second" may explicitly or implicitly include one or more such features. In the description of the embodiments herein, "a plurality of" means two or more, unless specifically defined otherwise.

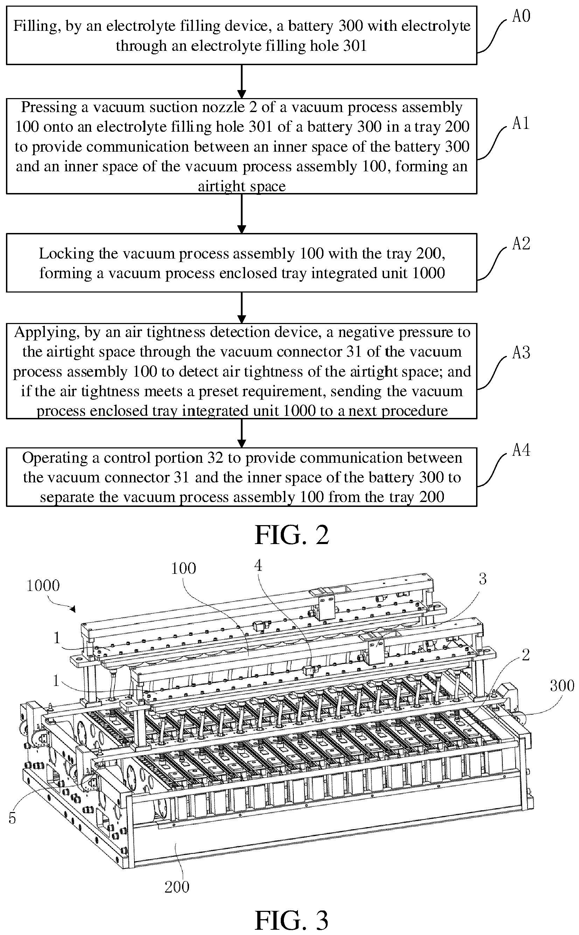

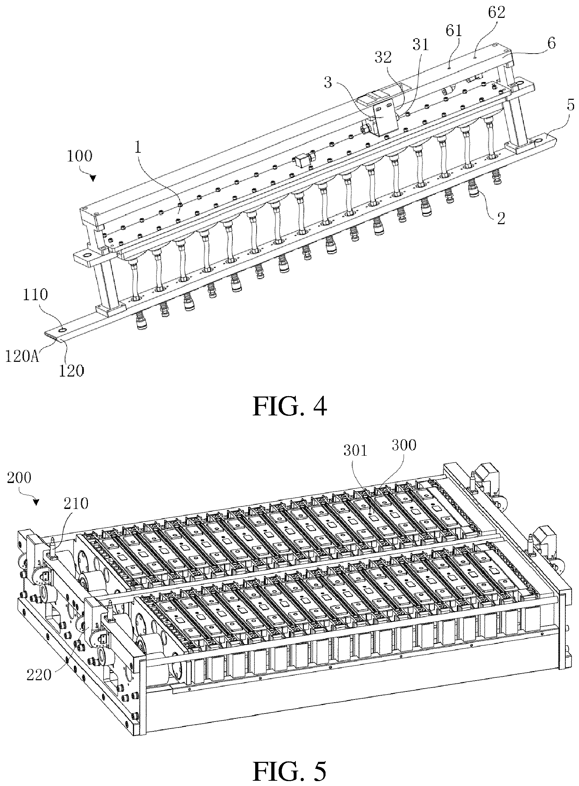

This embodiment provides a battery manufacturing method based on a vacuum process assembly, which is illustrated by taking a lithium ion battery as an example. Referring to FIGs. 3 and 4, in this embodiment, the vacuum process assembly 100 includes a vacuum cup 1, a vacuum suction nozzle 2, a normally-closed automatic control valve 3, and a vacuum suction nozzle mounting plate 5; and referring to FIG. 4, the normally-closed automatic control valve 3 includes a vacuum connector 31 and a control portion 32.

The vacuum cup 1 is capable of collecting electrolyte sucked out during vacuum formation and storing the electrolyte, so that the electrolyte in the battery is prevented from being sucked out together with air.

Referring to FIG. 4, the vacuum suction nozzle 2 is mounted on the suction nozzle mounting plate 5. The vacuum suction nozzle 2 is a suction nozzle applicable in negative pressure scenarios. The vacuum suction nozzle 2 is connected to the vacuum cup 1 via a pipeline such as a hose; and in this embodiment, the suction nozzle 2 is normally always in communication with the vacuum cup 1.

The automatic control valve 3 is a normally-closed valve and is capable of ensuring air tightness in negative pressure scenarios. Referring to FIG. 4, the automatic control valve 3 includes the vacuum connector 31 and the control portion 32. The automatic control valve 3 is mounted on a channel via which the vacuum cup 1 is connected to a vacuum source and is normally closed to seal the vacuum cup 1. The control portion 32 is used for providing communication or separation between the vacuum connector 31 and the inner space of the valve body of the automatic control valve 3.

Referring to FIG. 2, in this embodiment, the battery manufacturing method includes steps A0 to A4.

In the step A0, a battery 300 is filled with electrolyte through an electrolyte filling hole 301 by an electrolyte filling device.

Referring to FIG. 5, the battery 300 is provided with the electrolyte filling hole 301 which is specifically located on an upper surface of the battery 300. The battery is filled with electrolyte through the electrolyte filling hole by the electrolyte filling device in an electrolyte filling chamber; that is, a conventional electrolyte filling method is used. The electrolyte filling chamber needs to be treated to meet environment requirements for electrolyte filling.

In this embodiment, after electrolyte filling is completed, the battery filled with electrolyte is put into a tray 200; wherein, the tray 200 is a restraining tray. In other embodiments, other types of trays may be adopted as the tray 200.

Of course, referring to FIG. 1, the step A0 is optional.

In the step A1, the vacuum suction nozzle 2 of the vacuum process assembly 100 is pressed onto the electrolyte filling hole 301 of the battery 300 in the tray 200 to provide communication between an inner space of the battery 300 and an inner space of the vacuum process assembly 100, forming an airtight space.

Referring to FIGs. 3 and 5, a manipulator is used to grasp the vacuum process assembly 100 to align the vacuum suction nozzle 2 with the electrolyte filling hole 301 of the battery 300, and then the vacuum process assembly 100 is pressed down to connect the vacuum suction nozzle 2 to the electrolyte filling hole 301; therefore, the air tightness is ensured, and the electrolyte is prevented from being exposed to air. The inner space of the battery 300 specifically includes a cavity for containing electrolyte; and the inner space of the vacuum process assembly 100 specifically includes a cavity of the vacuum cup 1 and associated gas channels. After the vacuum suction nozzle 2 is pressed onto the electrolyte filling hole 301, the inner space of the battery 300 is in communication with the inner space of the vacuum process assembly 100, thereby forming an integral airtight space for fluids such as gas and liquid to flow.

In the step A2, the vacuum process assembly 100 is locked with the tray 200, forming a vacuum process enclosed tray integrated unit 1000.

In the step A1, the vacuum process assembly 100 is brought into contact with the tray 200 or is put on the tray 200, and then in the step A2, the vacuum process assembly 100 and the tray 200 are locked by operating a locking mechanism, so that the vacuum process assembly 100 and the tray 200 are integrated as a whole, and the vacuum process enclosed tray integrated unit 1000 is obtained and transferred to a subsequent procedure.

It should be noted that the step A2 may be carried out prior to the step A1, i.e., firstly, the vacuum process assembly 100 is locked with the tray 200, and then the vacuum suction nozzle 2 is connected to the electrolyte filling hole 301; alternatively, the step A2 and the step A1 are carried out almost simultaneously, for example: the locking mechanism is triggered to move into a ready-to-lock state while connecting the vacuum suction nozzle 2 to the electrolyte filling hole 301, and the vacuum process assembly 100 and the tray 200 are locked together as the connection between the vacuum suction nozzle 2 and the electrolyte filling hole 301 is completed. In this embodiment, referring to FIG. 3, two vacuum process assemblies 100 are locked with one tray 200; in other embodiments, one vacuum process assembly 100 is locked with one tray 200.

In the step A3, a negative pressure is applied by an air tightness detection device to the airtight space through the vacuum connector 31 of the vacuum process assembly 100 to detect air tightness of the airtight space; and if the air tightness meets a preset requirement, the vacuum process enclosed tray integrated unit 100 is sent to a next procedure.

The air tightness detection device is a vacuum work station capable of vacuumizing and detecting gas pressure.

The air tightness detection device is directly or indirectly connected to the vacuum connector 31 of the vacuum process assembly 100, and the control portion 32 of the automatic control valve 3 is then operated to provide communication between the vacuum connector 31 and the airtight space formed by the inner space of the battery 300 and the inner space of the vacuum process assembly 100. The air tightness detection device sucks gas in the airtight space to form a negative pressure in the airtight space. During the process of sucking the gas in the airtight space, a part of electrolyte is sucked out along with the gas; and due to the presence of the vacuum cup 1, this part of electrolyte is stored in the vacuum cup 1 while the gas is sucked out.

When the suction of gas is completed, the air tightness is detected. For example, the air tightness is detected by detecting the gas pressure in the airtight space; and if the gas pressure in the airtight space is kept within a preset range during a period of time, it is indicated that the air tightness meets the preset requirement.

Specifically, the air tightness is detected as follows: the air tightness detection device is kept to be connected to the vacuum connector 31 of the vacuum process assembly 100; the air tightness detection device is switched from a gas sucking state to an gas pressure detection state; if the air tightness meets the preset requirement, the control portion 32 of the automatic control valve 3 is operated to separate the vacuum connector 31 from the airtight space, the air tightness detection device and the vacuum connector 31 are disconnected, and then the vacuum process enclosed tray integrated unit 1000 is sent into the next procedure.

In this embodiment, the next procedure is high-temperature standing; and after high-temperature standing is completed, the vacuum process enclosed tray integrated unit 1000 enters a procedure of circulation, and then enters a procedure of vacuum formation; wherein, the vacuum process enclosed tray integrated unit 1000 may be sent to a vacuum formation fixture through a logistics line for vacuum formation.

If the air tightness does not meet the preset requirement, the vacuum process enclosed tray integrated unit 1000 may be sent into a manual detection procedure.

In the step A4, the control portion 32 is operated to provide communication between the vacuum connector 31 and the inner space of the battery 300 to separate the vacuum process assembly 100 from the tray 200.

The step A4 is to open the vacuum process enclosed tray integrated unit 1000. After vacuum formation is completed, the electrolyte filling hole 301 of the battery 300 needs to be exposed for secondary electrolyte supplementation or seal rivet welding. Therefore, the vacuum process assembly 100 needs to be separated from the tray 200 to expose the electrolyte filling port 301.

The control portion 32 is operated to provide communication between the vacuum connector 31 and the inner space of the battery 300, so that the gas pressure in the inner space of the battery 300 is changed. For example, a gas, such as a dry gas, is introduced into the vacuum connector 31 by a gas source to increase the gas pressure in the inner space of the battery 300, breaking the negative pressure, so that a suction force between the vacuum process assembly 100 and the tray 200 is reduced. In this manner, the vacuum process assembly 100 can be separated from the tray 200 to expose the electrolyte filling hole 301 of the battery 300. The vacuum process assembly 100 may then be transferred to a specified location, such as a work station for electrolyte filling, to be reused.

As can be seen from the above, after the battery 300 is filled with electrolyte, the vacuum suction nozzle 2 of the vacuum process assembly 100 is pressed onto the electrolyte filling hole 301 of the battery 300 in the tray 200 to provide communication between the inner space of the battery 300 and the inner space of the vacuum process assembly 100 to form the airtight space; the vacuum process assembly 100 is locked with the tray 200, forming the vacuum process enclosed tray integrated unit 1000; a negative pressure is applied to detect air tightness of the airtight space in the vacuum process enclosed tray integrated unit 1000; and if the air tightness meets a preset requirement, the vacuum process enclosed tray integrated unit 1000 is sent to the next procedure; and in the next procedure and even subsequent procedures, the air tightness of the vacuum process enclosed tray integrated unit 1000 can be maintained under the action of the vacuum cup 1 and the normally-closed automatic control valve of the vacuum process assembly 100; the inner space of the battery 300 is isolated from air in the external environment after electrolyte filling is completed, so that a vacuum space or a relative vacuum space is formed inside the battery 300. The internal vacuum space of the battery 300 can meet a series of environment requirements of the subsequent procedures, so that the requirements of the subsequent procedures on indoor air can be reduced, such as the environment requirements of standing or circulation can be reduced, thereby significantly reducing the cost of battery manufacturing. Besides, the reaction of the electrolyte is allowed to be always in a vacuum state, so that the reaction is not influenced by the atmosphere and is carried out purely; the time that the electrolyte is exposed to air during the whole manufacturing process is minimized, and therefore, the amount of leakage of electrolyte vapor is minimized; and as the process of plug inserting and plug removing as well as related equipment are eliminated, the production procedures can be simplified.

In this embodiment, the automatic control valve 3 is a pneumatic control valve; while in other embodiments, the automatic control valve 3 is a solenoid valve, but not limited thereto.

The control portion 32 of the pneumatic control valve 3 is a positive pressure connector. Thus, the step A4 specifically includes: a positive pressure is applied to the positive pressure connector 32 by a positive pressure source to provide communication between the vacuum connector 31 and the inner space of the battery 300; and a gas, such as dry air, is introduced into the vacuum connector 31 to break the vacuum in the vacuum process assembly 100 so as to separate the vacuum process assembly 100 from the tray 200. That is, a positive pressure gas is introduced into the positive pressure connector 32 by the positive pressure source to open the pneumatic control valve 3 to provide communication between the vacuum connector 31 and the inner space of the battery 300, and the dry air source is introduced through the vacuum connector 31 to break the vacuum in the vacuum process assembly 100, so that the suction force between the vacuum process assembly 100 and the tray 200 caused by negative pressure is reduced.

During vacuum formation, a positive pressure gas may be introduced to the positive pressure connector 32 to open the pneumatic control valve 3 to provide communication between the vacuum cup 1 and a vacuum source, and vaccumization is carried out to perform vacuum formation. For example, referring to FIG. 4, the vacuum connector 31 and the positive pressure connector 32, which are connected to the negative pressure and the positive pressure of the pneumatic control valve 3, are mounted on one side of a pneumatic control valve mounting plate 6 and are in communication with the pneumatic control valve 3 through gas pipes; referring to FIG. 4, a vacuum suction nozzle pressing interface 61 and a positive pressure suction nozzle interface 62 are provided on the other side of the pneumatic valve mounting plate 6, i.e., on the back of the side where the positive pressure connector 32 and the vacuum connector 31 are mounted; and during vacuum formation, a formation vacuum suction nozzle and a formation positive pressure suction nozzle are pressed onto the vacuum suction nozzle pressing interface 61 and the positive pressure suction nozzle interface 62, respectively, so that the negative pressure source and the positive pressure source are connected.

Referring to FIG. 5, in this embodiment, the tray 200 is provided with a positioning pin 210 and an automatic locking mechanism 220, and referring to FIG. 4, the vacuum process assembly 100 is provided with a positioning pin bushing 110 and a locking portion120. The automatic locking mechanism 220 is a structure capable of locking automatically, and is locked automatically after being triggered, for example, touched. The positioning pin bushing 110 is arranged on the vacuum suction nozzle mounting plate 5; the positioning pin bushing 110 may provide a grasping position for the manipulator to grasp the vacuum process assembly 100, that is, the manipulator may grasp the vacuum process assembly 100 via the positioning pin bushing 110. For example, the positioning pin 210 and the automatic locking mechanism 220 are directly fixed to the tray 200; specifically, the positioning pin 210 and the automatic locking mechanism 220 are arranged on an edge of the tray 200; the positioning pin bushing 110 and the locking portion 120 are arranged on an edge of the vacuum process assembly 100; the position of the positioning pin 210 corresponds to the position of the positioning pin bushing 110, and the positioning pin 210 serves for positioning during the process of connecting the vacuum process assembly 100; and the position of the automatic locking mechanism 220 corresponds to the position of the locking portion 120. Thus, the step A2 specifically includes: after the vacuum process assembly 100 is grasped, the positioning pin bushing 110 is aligned with the positioning pin 210 to allow the automatic locking mechanism 220 to lock the locking portion 120, thereby forming the vacuum process enclosed tray integrated unit 1000. The automatic locking mechanism 220 allows the locking portion 120 to enter a locking range of the automatic locking mechanism 220 by rotational yielding, and then locks the locking portion 120 by rotational restoration.

The positioning pin 210 is a diameter-variable or eccentric pin. The diameter of the positioning pin 210 is changed from small to large for coarse positioning and fine positioning during the process of connecting the vacuum process assembly 100.

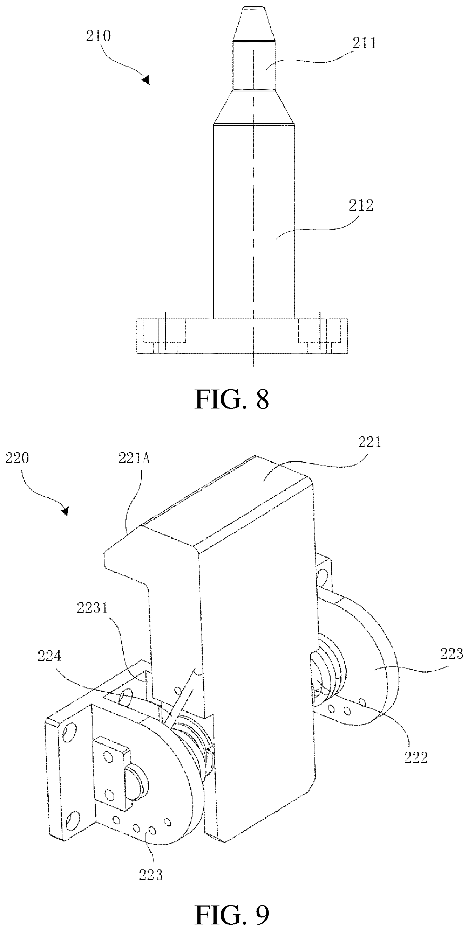

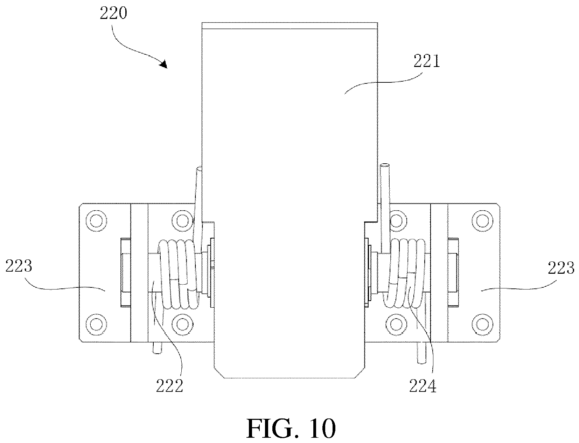

In this embodiment, referring to FIG. 8, the positioning pin 210 includes a guide portion 211 and a fixing portion 212; referring to FIGs. 9 and 10, the automatic locking mechanism 220 includes a hook 221, a rotating shaft 222, a support 232, and a rotating restoration component 224; wherein the rotating restoration component 224 is a torsion spring; referring to FIG. 9, the hook 221 is provided with a first guide surface 221A; and referring to FIG. 4, the locking portion 120 is provided with a second guide surface 120A.

Referring to FIG. 9, a boss 2231 is provided on the support 223 to define the position of the hook 221 such that the hook 221 is in a vertical position under the action of a pre-tightening force of the torsion spring.

The rotating shaft 222 is fixed to the two supports 223. The hook 221 is rotatable about the rotating shaft 222. The position of the hook 221 is maintained by the pre-tightening force of the two torsion springs, i.e., the rotating restoration component 224.

The step A2 specifically includes: after the vacuum process assembly 100 is grasped, the positioning pin bushing 110 is aligned with the guide portion 211 of the positioning pin 210; wherein, a hole of the positioning pin bushing 110 is sized to be larger than the cross section of the guide portion 211 and slightly larger than the cross section of the fixing portion 212, so that the positioning pin bushing 110 may be just sleeve the periphery of the fixing portion 212 after passing through the guide portion 211; that is, during the process of pressing the vacuum process assembly 100 onto the tray 200, the positioning pin bushing 110 may cooperate with the guide portion 211 and the fixing portion 212 mounted on the restraining tray for coarse positioning and fine positioning; when the vacuum process assembly 100 is pressed down, the second guide surface 120A of the locking portion 120 is brought into contact with the first guide surface 221A of the hook 221, and the locking portion 120 forces the hook 221 to rotate about the rotating shaft 222, which is fixed to the supports 223, to yield to the locking portion 120; wherein, the second guide surface 120A and the first guide surface 221A are inclined planes; when the yielding reaches a certain degree or the pressing is in position, the second guide surface 120A is separated from the first guide surface 221A, the manipulator releases the vacuum process assembly 100, the hook 221 returns to an initial position under the action of the rotating restoration component 224, and the hook 221 automatically springs back by means of the pre-tightening force of the rotating restoration component 224 so as to automatically press the locking portion 120; in this way, the hook 221 presses the locking portion 120 by rotational yielding and rotational restoration. Thus, in this embodiment, the vacuum process assembly 100 may be quickly pressed onto the tray 200, thereby further reducing the time that the electrolyte is exposed to the air.

During unlocking, a pushing force is applied to a lower part of the hook 221, and after the hook 221 rotates a certain angle, the vacuum process assembly 100 is taken out, and the hook 221 is released, so that the unlocking is completed.

Referring to FIG. 5, the position of the positioning pin 210 is variable, that is, the position of the positioning pin 210 on the tray 200 is variable. Therefore, even if the type of the battery on the tray 200 is changed and the position of the electrolyte filling hole 301 is changed, the position of the vacuum process assembly 100 may be changed by changing the mounting direction of the positioning pin 210, so that the vacuum process assembly 100 can be accurately pressed onto the battery.

In other embodiments, the tray 200 is provided with a positioning pin bushing 110 and a locking portion 120, and the vacuum process assembly 100 is provided with a positioning pin 210 and an automatic locking mechanism 220; or, the tray 200 is provided with a positioning pin bushing 110 and an automatic locking mechanism 220, and the vacuum process assembly 100 is provided with a positioning pin 210 and a locking portion 120; or, the tray 200 is provided with a positioning pin 210 and a locking portion 120, and the vacuum process assembly 100 is provided with a positioning pin bushing 110 and an automatic locking mechanism 220.

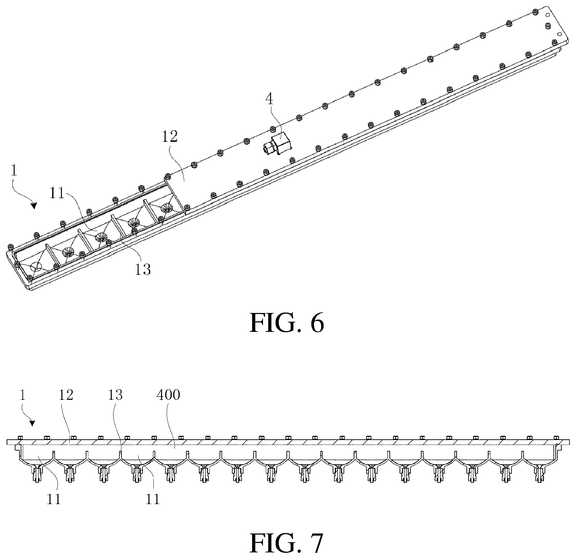

In this embodiment, the vacuum cup 1 is an integral vacuum cup. Referring to FIGs. 6 and 7, the vacuum cup 1 includes a plurality of independent spaces 11; the independent spaces 11 are capable of collecting electrolyte sucked out from the individual batteries 300 during vacuum formation and storing the electrolyte, so that the electrolyte in the individual batteries 300 is prevented from being sucked out together with air. The number of the vacuum suction nozzles 2 is plural. Each individual space 11 is in communication with one vacuum suction nozzle 2. Each vacuum suction nozzle 2 is pressed onto the electrolyte filling hole 301 of one battery 300. If there is any vacuum suction nozzle 2 that is not pressed to an electrolyte filling hole 301, it may be blocked with a plug to ensure air tightness.

Referring to FIGs. 6 and 7, the plurality of independent spaces 11 are implemented as follows: the vacuum cup 1 is provided with a top plate 12 and partition plates 13; the independent spaces 11 are separated by a plurality of partition plates 13; specifically, one partition plate 13 is arranged between every two adjacent independent spaces 11; and a gap exists between the partition plates 13 and the top plate 12 to form a common space 400. Each individual space 11 is in communication with the common space 400.

Referring to FIG. 6, in this embodiment, the vacuum process assembly 100 further includes a collecting connector 4. The common space 400 may communicate with the vacuum connector 31 via the collecting connector 4, i.e., each individual space 11 may be connected to the vacuum connector 31 via the collecting connector 4.

According to the number of the batteries, the inner space of the vacuum cup 1 is equally partitioned by the partition plates into the spaces 11 for independently containing the electrolyte of the battery at the corresponding position, thereby preventing the electrolyte from flowing mixedly. The interior of the space 11 is tapered, i.e., a conical space tapering from top to bottom, which facilitates backflow of the electrolyte. A gap exists between the partition plates 13 and the top plate 12, so that gas in the vacuum cup 1 can circulate. The top plate 12 may be used for impaction and settling of the electrolyte, so that the electrolyte is prone to flow back into the corresponding battery. The collecting connector 4 is provided on the top plate 12, and may be connected to a vacuum air source via the pneumatical control valve 3. In other embodiments, the vacuum cup 1 is a partitioned structure including a plurality of individual sub vacuum cups.

The battery manufacturing method of the embodiment is applicable to all aluminum-can lithium ion batteries. The battery manufacturing method of the embodiment can be applied to manufacture other batteries according to practical needs.

This embodiment also provides a battery manufacturing system for implementing the battery manufacturing method in this embodiment. The battery manufacturing system includes the vacuum process assembly 100 and the tray 200 described above.

For a conventional battery manufacturing method, in the process from electrolyte filling to vacuum formation, the reaction of electrolyte may be interfered by residual atmosphere; the process of plug inserting and plug removing needs to be carried out by two automatic devices, and electrolyte vapor may be leaked in this process, causing environmental pollution. Therefore, in the conventional battery manufacturing method, the reaction of electrolyte is influenced by the atmosphere and is not pure enough; the process of plug inserting and plug removing is carried out by complex procedures with additional devices, resulting in high cost; and electrolyte vapor is greatly leaked, causing environmental pollution.

In contrast, according to the embodiment of the present disclosure, the batteries may be vacuumized in advance so as to be prevented from contacting air from the source, and the reaction of the electrolyte is allowed to be always in a vacuum state, so that the reaction is not influenced by the atmosphere and is carried out purely. According to the embodiment of the present application, it needs only one work station for assembling/disassembling the vacuum process enclosed tray integrated unit 1000 (closing or opening the vacuum process enclosed tray integrated unit 1000) and detecting air tightness, and the process of plug inserting and plug removing as well as related equipment are eliminated, so that the production procedures can be simplified; the automatic locking mechanism 220 locks the vacuum process assembly 100 and the restraining tray together until the vacuum formation is completed, then the vacuum process assembly 100 is unlocked, then a sealing rivet is quickly welded, and the normally-off or normally-closed pneumatic control valve 3 prevents the negative pressure channel of the vacuum process enclosed tray integrated unit 1000 from communicating with the external atmosphere during circulation, so that the electrolyte is prevented from being exposed to the air for a long time, and the electrolyte vapor leakage in the production process can be minimized. According to the present application, during manufacturing of a battery, an airtight environment is formed for the battery which is opened without secondary sealing of the electrolyte filling hole, so that the requirement on indoor air for battery manufacturing can be reduced.

The foregoing is a further detailed description of the present application, taken in conjunction with specific/preferred embodiments, and is not to be construed as limiting the specific embodiments of the present application. It will be apparent to those skilled in the art to which this application pertains that many alternatives or modifications to the described embodiments may be devised without departing from the spirit thereof, and all such alternatives or modifications are deemed to be within the scope of this application.

## Claims

1. A battery manufacturing method based on a vacuum process assembly, **characterized in that**: the vacuum process assembly comprises a vacuum cup, a vacuum suction nozzle and a normally-closed automatic control valve; the automatic control valve comprises a vacuum connector and a control portion;
A1. pressing the vacuum suction nozzle of the vacuum process assembly onto an electrolyte filling hole of a battery in a tray to provide communication between an inner space of the battery and an inner space of the vacuum process assembly, forming an airtight space;
A2. locking the vacuum process assembly with the tray, forming a vacuum process enclosed tray integrated unit;
A3. applying, by an air tightness detection device, a negative pressure to the airtight space through the vacuum connector of the vacuum process assembly to detect air tightness of the airtight space; and if the air tightness meets a preset requirement, sending the vacuum process enclosed tray integrated unit to a next procedure; and
A4. operating the control portion to provide communication between the vacuum connector and the inner space of the battery so as to separate the vacuum process assembly from the tray.

2. The battery manufacturing method according to claim 1, **characterized in that**, the automatic control valve is implemented in a form of a pneumatic control valve or a solenoid valve;
the control portion of the pneumatic control valve is a positive pressure connector; and
the step A4 specifically comprises: applying, by a positive pressure source, a positive pressure to the positive pressure connector to provide communication between the vacuum connector and the inner space of the battery; and introducing a gas into the vacuum connector to break the negative pressure in the vacuum process assembly so as to separate the vacuum process assembly from the tray.

3. The battery manufacturing method according to claim 1, **characterized in that**,
an automatic locking mechanism locks a locking portion by rotational yielding and restoration;
the tray is provided with a positioning pin and an automatic locking mechanism, and the vacuum process assembly is provided with a positioning pin bushing and a locking portion; or, the tray is provided with a positioning pin bushing and a locking portion, and the vacuum process assembly is provided with a positioning pin and an automatic locking mechanism; or, the tray is provided with a positioning pin bushing and an automatic locking mechanism, and the vacuum process assembly is provided with a positioning pin and a locking portion; or, the tray is provided with a positioning pin and a locking portion, and the vacuum process assembly is provided with a positioning pin bushing and an automatic locking mechanism; and
the step A2 specifically comprises: aligning the positioning pin bushing with the positioning pin to allow the automatic locking mechanism to lock the locking portion, thereby forming the vacuum process enclosed tray integrated unit.

4. The battery manufacturing method according to claim 3, **characterized in that**, the positioning pin comprises a guide portion and a fixing portion, the automatic locking mechanism comprises a hook, a rotating shaft, a support and a rotational restoration component, the hook is provided with a first guide surface, and the locking portion is provided with a second guide surface; the rotating restoration component is a torsion spring; a position of the positioning pin is variable; and
the step A2 specifically comprises: aligning the positioning pin bushing with the guide portion of the positioning pin to allow the second guide surface of the locking portion to contact with the first guide surface of the hook such that the hook presses the locking portion by rotational yielding and restoration.

5. The battery manufacturing method according to claim 1, **characterized in that**, the vacuum cup comprises a plurality of independent spaces, and each independent space is in communication with one vacuum suction nozzle.

6. The battery manufacturing method according to claim 5, **characterized in that**, the vacuum process assembly further comprises a collecting connector; the vacuum cup is provided with a top plate and a partition plate; the independent spaces are separated by a plurality of the partition plate; a gap exists between the partition plates and the top plate to form a common space; and the common space is in communication with the vacuum connector via the collecting connector.

7. The battery manufacturing method according to claim 6, **characterized in that**, each independent space is a conical space tapering from top to bottom; and the tray is a restraining tray.

8. The battery manufacturing method according to claim 1, **characterized in that**, the next procedure is high-temperature standing.

9. The battery manufacturing method according to claim 1, **characterized by** further comprising: putting a battery that has been filled with electrolyte into the tray.

10. A battery manufacturing system, **characterized in that**: the system is used for implementing the method according to any one of claims 1 to 9.
